(19) Europäisches Patentamt
European Patent Office
Office européen des brevets

(11) **EP 2 045 455 B1**

(12) **FASCICULE DE BREVET EUROPEEN**

(45) Date de publication et mention
de la délivrance du brevet:
**26.12.2018 Bulletin 2018/52**

(51) Int Cl.:
*F02D 41/00* (2006.01)    *F02D 41/18* (2006.01)
*F02B 37/12* (2006.01)    *F02D 23/00* (2006.01)

(21) Numéro de dépôt: **08165430.3**

(22) Date de dépôt: **29.09.2008**

(54) **Moteur thermique equipe d'un turbocompresseur de suralimentation et procede pour lutter contre le pompage du turbocompresseur**

Wärmekraftmotor, der mit einem Abgasturbolader ausgerüstet ist und Verfahren gegen den Pumpvorgang des Turboladers

Heat engine equipped with a turbocharger and method for fighting against the pumping of the turbocharger

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **02.10.2007 FR 0757993**

(43) Date de publication de la demande:
**08.04.2009 Bulletin 2009/15**

(73) Titulaire: **PSA Automobiles SA**
**78300 Poissy (FR)**

(72) Inventeurs:
• **Hayat, Olivier**
**78000 Versailles (FR)**
• **Calendini, Pierre-Olivier**
**92210 Saint Cloud (FR)**

(74) Mandataire: **Ménès, Catherine et al**
**PSA Automobiles SA**
**VEIP - VV1400**
**Route de Gisy**
**78140 Velizy Villacoublay (FR)**

(56) Documents cités:
EP-A- 1 398 490    DE-A1-102006 051 669
JP-A- 3 100 398    US-A1- 2007 012 030
US-B1- 7 010 914

**Description**

L'invention concerne un moteur thermique équipé d'un turbocompresseur, ce turbocompresseur comprenant un compresseur pour comprimer un mélange gazeux à admettre en entrée du moteur et une turbine entraînant mécaniquement ce compresseur et située en sortie du moteur pour détendre les gaz d'échappement issus du moteur. Ce moteur est en outre équipé d'un circuit de recirculation pour récupérer des gaz d'échappement du moteur afin de les réinjecter en entrée du moteur.

Le mélange gazeux admis dans le compresseur est ainsi un mélange d'air frais et de gaz d'échappement recirculés. L'intérêt de reconduire à l'admission les gaz d'échappement du moteur est de diminuer l'émission de substances polluantes telles que les oxydes d'azote dits Nox. En effet, ces Nox sont formés par la combinaison à haute température de l'oxygène et de l'azote contenus dans l'air frais alimentant le moteur. Ainsi, le fait de remplacer lors de certaines phases de fonctionnement du moteur, une partie de cet air par des gaz pauvres en oxygène, diminue la quantité d'oxygène disponible et ainsi la formation de Nox.

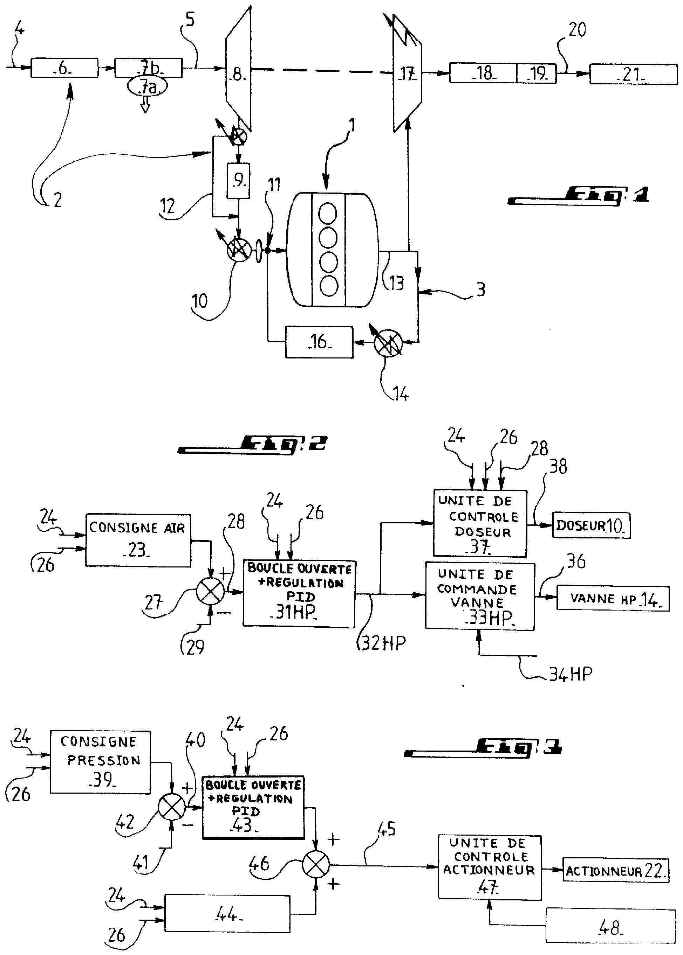

L'exemple de la figure 1 représente un moteur diesel suralimenté répondant à la définition ci-dessus. Ce moteur 1 est alimenté d'une part en air 4 par un conduit d'admission 2 et d'autre part en gaz par un circuit de recirculation de ces gaz 3.

Dans le conduit d'admission 2, l'air frais 4 est véhiculé au travers d'un filtre 6. Sa température et son débit massique sont mesurés respectivement par un capteur de température 7a et un capteur de débit (débitmètre) 7b, préalablement à l'introduction au sein du compresseur 8 de cet air 4. L'air compressé issu du compresseur est soit refroidi par le refroidisseur 9 puis acheminé vers un doseur 10 soit directement véhiculé jusqu'à ce doseur 10 au moyen d'une conduite de dérivation 12, qui court-circuite le refroidisseur 9. L'air en sortie du doseur 10 circule jusqu'à une jonction de mélange 11 située en amont de l'admission du moteur.

Un circuit 3 est agencé pour prélever les gaz d'échappement directement à la sortie 13 du moteur 1 à laquelle ces gaz présentent une pression et une température élevées, et les achemine vers la jonction de mélange 11. Pour ces raisons ce circuit constitue un circuit de recirculation dit haute pression, haute température. Il comprend une vanne de régulation 14, dite vanne EGR ( acronyme de l'expression anglaise Exhaust Gaz Recirculation qui signifie recirculation des gaz d'échappement), ainsi qu'un échangeur de chaleur 16.

Les gaz issus du moteur qui ne sont pas recirculés sont acheminés vers la turbine 17 du turbocompresseur, au moyen de laquelle ces gaz sont détendus. Ces gaz dits basse pression BP sont épurés par l'intermédiaire d'un catalyseur 18 et filtrés par un filtre à particule 19, préalablement à leur évacuation au niveau de l'échappement 21 du véhicule. Cependant, une quantité trop importante de gaz recirculés entraîne une augmentation des taux de suie, de monoxyde de carbone et d'hydrocarbure qui constituent à l'image des Nox, des substances polluantes. Ainsi, un contrôle précis de la quantité de gaz recirculés est nécessaire pour gérer au mieux le compromis entre la diminution des émissions de Nox d'une part et l'augmentation des émissions de suie, de monoxyde de carbone et d'hydrocarbure d'autre part.

Ce contrôle est assuré par le pilotage de la vanne de régulation 14 du circuit 3 qui régule les proportions d'air et de gaz du mélange gazeux d'admission, tel que par exemple le pilotage illustré sur la figure 2. Selon cette figure 2, une consigne de débit d'air 23 est déterminée en fonction du régime courant du moteur 24 et d'une consigne de débit du carburant à injecter 26. Un certain nombre de corrections pourront être ajoutées ou multipliées. Cette consigne 23 est communiquée à une unité de commande qui comprend une boucle ouverte et un régulateur à paramètres variables 31 HP, qui reçoit également les données relatives au régime moteur 24 et à la consigne de débit de carburant 26 et un certain nombre de corrections.

Ce régulateur 31 HP est apte à faire correspondre aux trois paramètres 24, 26, 28 qu'il reçoit, une consigne 32HP de position pour la vanne HP 14 de façon à jouer sur le débit d'air qui dépend de la position de la vanne 14 pour une pression d'admission et d'échappement du moteur qui est généralement fonction du régime moteur. Cette consigne de position 32HP est transmise à une unité de commande 33HP qui intègre également la position courante 34HP de la vanne 14 et qui communique en fonction de l'écart existant entre ces deux données 32, 34, une commande 36HP de déplacement de la vanne 14. Cette consigne 32 peut également être transmise à une unité 37 de contrôle de la position du doseur d'air 10 qui réceptionne en outre les données relatives au régime courant du moteur 24, au débit de carburant à injecter 26 et l'information 28. L'unité 37 de contrôle peut alors calculer une commande 38 de la position du doseur 10 en fonction des données qu'elle reçoit. En parallèle du contrôle du débit d'air, une régulation de la pression de suralimentation est réalisée en asservissant un actionneur de turbine à géométrie variable 22, tel qu'illustré sur la figure 3.

Selon ce schéma, une consigne de pression de suralimentation 39 est déterminée à partir du régime courant du moteur 24 et de la consigne de débit du carburant à injecter 26 précités. Un comparateur 42 compare cette consigne 39 à une mesure de la pression courante de suralimentation 41 et transmet une information 40 représentant l'écart existant entre ces deux grandeurs à un régulateur PID 43. En fonction de cette information 40, du régime courant du moteur 24 et de la consigne de débit du carburant à injecter 26, le régulateur 43 détermine la position particulière de l'actionneur de la turbine qui permet d'atteindre la pression de consigne 39. Cette donnée est associée à une information sur le pré positionnement 44 de l'actionneur 22 pour déterminer un signal 45 représentatif du déplacement nécessaire pour l'actionneur 22.

Une unité de contrôle 47 est alors utilisée pour déplacer l'actionneur 22 à la position souhaitée. Le contrôle de la position de l'actionneur 22 peut être amélioré lorsque le moteur comprend un capteur de position 48 de l'actionneur 22.

D'autres dispositifs peuvent être ajoutés aux contrôles de débit d'air et de pression de suralimentation pour diminuer encore les émissions de substances polluantes générées par le moteur.

Les régulations fonctionnent avec satisfaction pour un comportement normal des flux gazeux. Cependant il arrive d'observer un phénomène gênant qui peut se produire dans certains cas particuliers de régime ou de changement de régime de marche du véhicule. Un déséquilibre entre les pressions amont et avale du compresseur, provoquent une circulation à contre sens des gaz dans le compresseur. Cette circulation à contre sens réduit les performances du compresseur jusqu'à modifier suffisamment la pression avale pour que le compresseur rétablisse le sens normal de circulation des gaz mais malheureusement sans pouvoir maintenir ce sens normal. On appelle pompage du compresseur ce phénomène instable d'aller retour entre un sens de circulation des gaz et le sens inverse. Outre les instabilités qu'il provoque sur les régulations, ce phénomène a le fâcheux inconvénient d'abîmer les actionneurs et plus particulièrement le compresseur à cause des chocs produits par les écoulements opposés et souvent turbulents.

Une démarche souvent adoptée consiste à identifier un ou plusieurs régimes ou changements de régimes de marche du véhicule à l'occasion desquels un pompage du compresseur se produit et à agir sur de telles causes dans le but d'empêcher un pompage du compresseur. Un inconvénient est que de telles causes sont souvent lointaines, en d'autres termes elles touchent d'autres phénomènes que le seul phénomène de pompage et une action sur ces causes peut avoir des effets secondaires sur ces autres phénomènes ou constituer seulement un remède d'efficacité limitée. Un autre inconvénient est que rien ne garantit une exhaustivité dans la prise en compte de telles causes et un phénomène de pompage pourrait se produire pour une cause non envisagée.

Par exemple, la demande de brevet US2007/012030 a proposé de fermer purement et simplement la vanne EGR et d'ouvrir lentement la vanne du circuit de suralimentation dans le cas particulier où le coefficient d'excès d'air passe de riche à maigre de façon à éviter un accroissement rapide du taux d'entrée d'air, ceci dans le but d'empêcher un pompage du compresseur. On est momentanément privé du bénéfice du circuit de recirculation qui est systématiquement fermé jusqu'à récupération de conditions plus favorables.

L'invention vise à pallier les inconvénients mentionnés ci dessus en remédiant au phénomène de pompage quelque soit la cause lointaine à son origine.

A cet effet, l'invention concerne un moteur thermique comprenant une chambre de combustion, un compresseur pour comprimer un gaz à admettre en entrée de la chambre de combustion et un doseur disposé en sortie du compresseur et commandé par un boîtier électronique de façon à réguler un débit massique de gaz.

Le moteur est remarquable en ce que le boîtier électronique est agencé pour ne pas descendre en dessous d'un débit massique minimal qui est calculé en fonction d'un taux de compression du compresseur scruté en temps réel, de façon à ne pas franchir une limite de pompage.

Dans un mode de réalisation préféré, le moteur comprend un capteur de pression en amont du compresseur et le boîtier dispose de ressources de calcul ordonnancées pour calculer le taux de compression scruté en divisant une pression en aval du compresseur par une pression mesurée au moyen du capteur de pression amont.

Avantageusement, le moteur comprend un capteur de température en aval du compresseur et le boîtier électronique dispose de ressources de calcul ordonnancées pour calculer une pression estimée en aval du compresseur en multipliant une masse volumique de gaz accumulée entre le compresseur et le doseur par une température absolue mesurée au moyen du capteur de température.

Avantageusement aussi, le moteur comprend un capteur de débit massique en aval du compresseur et le boîtier électronique dispose de ressources de calcul ordonnancées pour calculer une estimation de masse de gaz accumulée en aval du compresseur en soustrayant un débit massique de gaz traversant le doseur d'un débit massique de gaz mesuré au moyen du capteur de débit et en intégrant dans le temps la différence ainsi obtenue.

Avantageusement aussi, le moteur comprend un capteur de pression en aval du doseur et le boîtier électronique dispose de ressources de calcul ordonnancées pour calculer une estimation de débit traversant le doseur en fonction d'une section efficace du doseur et d'une pression de suralimentation mesurée au moyen du capteur de pression de suralimentation.

Particulièrement le moteur comprend un capteur de position du doseur et le boîtier électronique dispose de ressources de calcul ordonnancées pour calculer une estimation de section efficace du doseur au moyen d'une cartographie du doseur qui donne une valeur de section efficace en fonction d'une position du doseur mesurée au moyen du capteur de position.

L'invention concerne encore un procédé pour comprimer un gaz au moyen d'un compresseur et pour réguler un débit massique de gaz comprimé au moyen d'un doseur disposé en sortie du compresseur.

Le procédé est remarquable en ce qu'il comprend une étape limitative dans laquelle un débit massique minimal est calculé en fonction d'un taux de compression du compresseur scruté en temps réel de façon à ne pas franchir une limite de pompage.

Particulièrement le taux de compression scruté dans ladite étape limitative est calculé en divisant une pression en aval du compresseur par une pression mesurée au moyen d'un capteur de pression en amont du compresseur.

Avantageusement selon la configuration du moteur à disposition, le procédé comprend tout ou partie d'un ensemble d'étapes parmi lesquelles on notera une étape estimative de pression dans laquelle une pression estimée en aval du compresseur est calculée en multipliant une masse volumique de gaz accumulée entre le compresseur et le doseur par une température mesurée au moyen d'un capteur de température en aval du compresseur, une étape estimative de masse accumulée dans laquelle une estimation de masse de gaz accumulée en aval du compresseur est calculée en soustrayant un débit massique de gaz traversant le doseur d'un débit massique de gaz mesuré au moyen d'un capteur de débit en aval du compresseur et en intégrant dans le temps la différence ainsi obtenue, une étape estimative de débit dans laquelle une estimation de débit traversant le doseur est calculée en fonction d'une section efficace du doseur et d'une pression de suralimentation mesurée au moyen d'un capteur de pression en aval du doseur et une étape estimative de section efficace dans laquelle une estimation de section efficace du doseur est calculée au moyen d'une cartographie du doseur qui donne une valeur de section efficace en fonction d'une position du doseur mesurée au moyen d'un capteur de position du doseur.

L'invention sera mieux comprise, et d'autres caractéristiques et avantages de celle-ci apparaîtront au cours de la description suivante, faite en référence aux figures annexées, parmi lesquelles :

- la figure 1 précitée représente une vue schématique d'un moteur thermique équipé d'un turbocompresseur de type connu,
- la figure 2 susmentionnée illustre un schéma de principe d'une régulation du débit d'air frais au sein du moteur de la figure 1,
- la figure 3 montre un schéma de principe d'une régulation de la pression de suralimentation du moteur de la figure 1,
- la figure 4 illustre une vue schématique d'un moteur thermique équipé d'un turbocompresseur, selon l'invention,
- la figure 5 représente des abaques de caractéristiques de turbocompresseur,
- la figure 6 montre des étapes de procédé pour estimer une pression avale du compresseur dans le cadre de l'invention,
- la figure 7 montre des étapes de procédé pour calculer un débit minimal du compresseur dans le cadre de l'invention,
- la figure 8 est un schéma de régulation de l'alimentation gazeuse de la chambre de combustion.

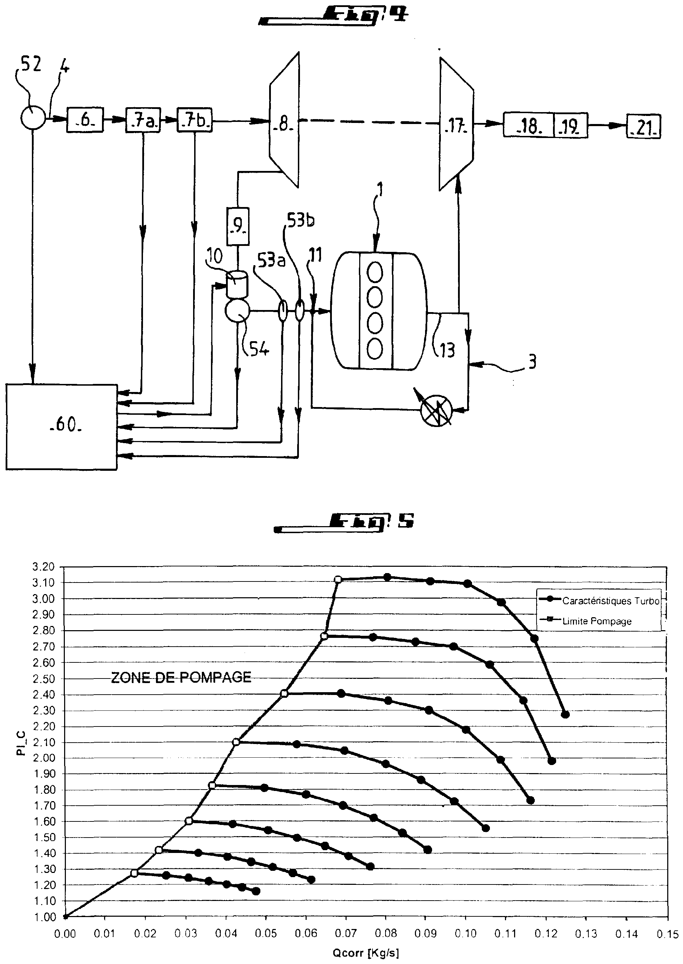

Le moteur selon l'invention représenté sur la figure 4 comprend en outre de ses éléments communs avec le moteur de l'état de la technique de la figure 1, un capteur de pression 52 pour mesurer la pression atmosphérique $P_{atm}$ en amont du compresseur 8.

Un capteur de température 53a et un capteur de pression 53b sont situés en aval du doseur 10 pour mesurer respectivement la température $T_{sural}$ et la pression $P_{sural}$ des gaz de suralimentation avant de les mélanger aux gaz recyclés. Le capteur de température 53a peut aussi être situé préférentiellement dans le voisinage et en amont du doseur 10.

Les capteurs 52, 53a et 53b sont reliés à un boîtier de contrôle/commande électronique 60 et auquel sont reliés un capteur 54 pour mesurer une position d'ouverture $POS_{doseur}$ du doseur 10, le capteur 7a de température atmosphérique $T_{atm}$ et le débitmètre 7b pour mesurer un débit massique de gaz $Q_{débimètre}$ en amont du compresseur 8.

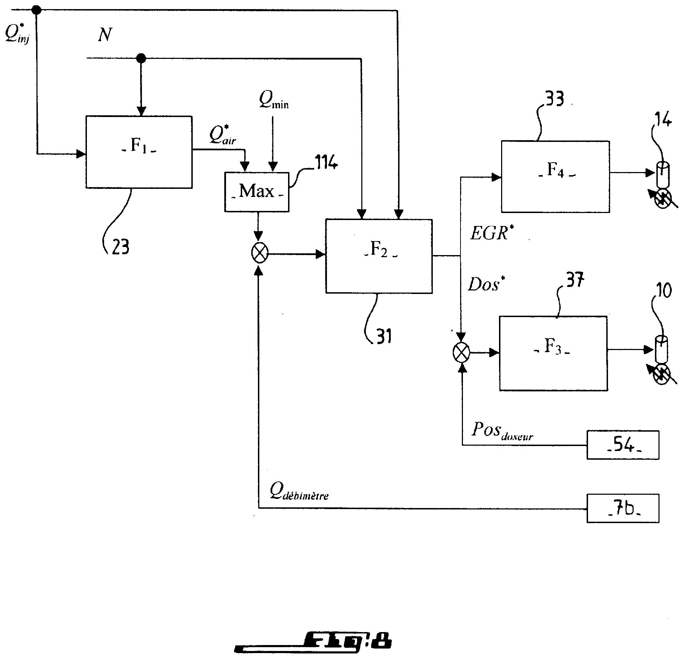

En référence à la figure 8, le boîtier 60 est agencé pour générer analogiquement ou numériquement une commande d'ouverture Dos* du doseur 10 de façon à minimiser une erreur entre un débit massique de référence $Q_{air}^{*}$ d'air extérieur en entrée de la chambre de combustion 1 et le débit massique de gaz $Q_{débimètre}$ mesuré. Généralement, la commande d'ouverture Dos* est un signal électrique image du débit massique de référence $Q_{air}^{*}$ par un filtre $F_2$ qui comprend une amplification de la différence $(Q_{air}^{*} - Q_{débimètre})$. Le débit massique de référence $Q_{air}^{*}$ est l'image par un filtre $F_1$ d'un débit d'injection de référence $Q_{inj}^{*}$. Le filtre $F_1$ est constamment adaptée par différents paramètres environnementaux du moteur tel que par exemple la vitesse de rotation N. Le débit d'injection de référence $Q_{inj}^{*}$, la vitesse de rotation N et d'autres paramètres environnementaux du moteur servent aussi à adapter en permanence le filtre $F_2$.

Le boîtier 60 conforme à l'invention est agencé de façon à ce que la commande d'ouverture Dos* soit constamment l'image d'un débit massique en référence supérieur à un débit massique minimal $Q_{min}$. Dans le mode de réalisation représenté en figure 8, cette particularité est réalisée au moyen d'un filtre 114 qui laisse systématiquement passer la valeur maximale parmi $Q_{air}^*$ et $Q_{min}$.

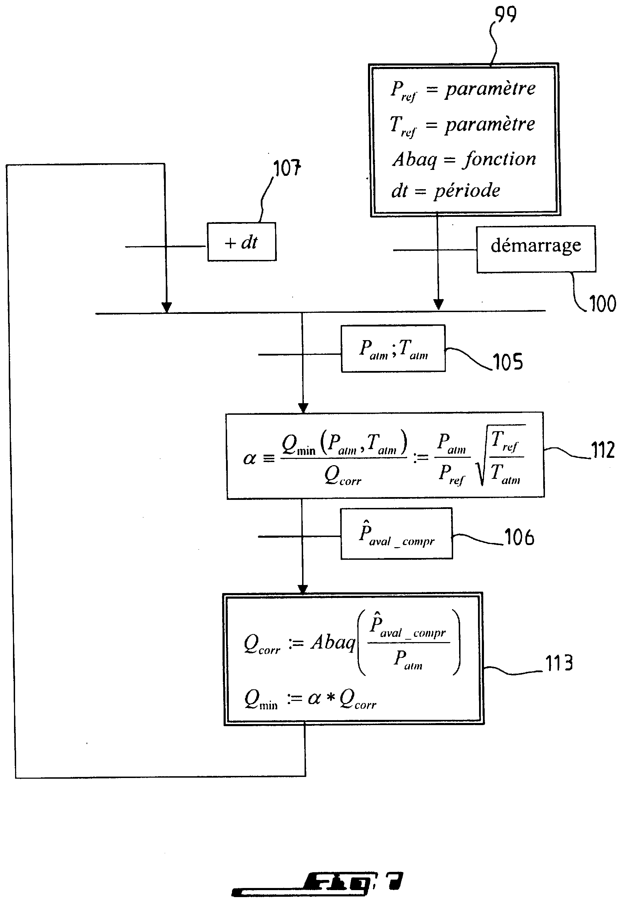

Dans le procédé conforme à l'invention, la valeur de débit massique minimal $Q_{min}$ est calculée en temps réel par un calculateur hébergé dans ou à l'extérieur du boîtier 60 de la manière expliquée à présent en référence à la figure 7.

Dans une étape initiale 99, le calculateur comprend en mémoire des abaques de fonctionnement du turbocompresseur qui ont préalablement été mesurées dans des conditions de température amont $T_{ref}$ et de pression amont $P_{ref}$ pour lesquelles le calculateur est paramétré. Le calculateur a une période d'horloge temps réel dt.

Les abaques mémorisées sont expliquées à présent en référence à la figure 5 où un diagramme porte en abscisse un débit massique $Q_{corr}$ traversant le compresseur normalisé en fonction de la température et de la pression amont compresseur et porte en ordonnée un taux de compression Pi_C qui est le rapport de la pression avale sur la pression amont du compresseur.

Chaque courbe caractéristique correspond à un régime de fonctionnement du compresseur. A un régime donné, le taux de compression décroît légèrement en fonction du débit à faible débit puis la décroissance s'accentue lorsque le débit augmente. Contrairement à toute attente, on n'observe pas de taux de compression maximal à débit nul. Bien au contraire, il existe une limite de décrochage représentée par la courbe ascendante qui coupe les différentes caractéristiques. Plus le taux de compression est fort, plus élevé est le débit en deçà duquel on observe un phénomène de pompage (surging en anglais), c'est-à-dire une instabilité traduite par un mouvement alternatif de débit à contre courant. Par exemple, on observe dans le cas de la figure 5, une entrée en zone de pompage si le débit baisse en dessous de 0,07 Kg/s à un taux de compression de 3,10 ou en dessous de 0,03 Kg/s à un taux de compression de 1,60. Les turbulences dans la zone de pompage ne permettent plus d'établir une relation stable entre le taux de compression et le débit.

Les abaques sont par exemple mémorisées sous forme de tables associatives avec des correspondances entre régimes de fonctionnement, taux de compression et débits massiques traversant. Pour le mode de mise en oeuvre ici exposé, il est suffisant de mémoriser un tableau à deux colonnes, la première étant attribuée au taux de compression et la seconde contenant le débit limite de pompage qui correspond au taux de compression figurant sur la même ligne de la première colonne de façon à reproduire la courbe ascendante de la figure 5.

Revenant à la figure 7, l'étape initiale 99 est quittée lorsqu'une transition 100 est validée par une mise en contact de démarrage. Une transition 105 est validée par un échantillonnage de la pression $P_{atm}$ et de la température $T_{atm}$ atmosphériques lors d'un top d'horloge temps réel. La validation de la transition 105 active une étape 112. L'étape 112 est agencée pour calculer un coefficient a de mise à l'échelle qui représente le rapport entre le débit réel dans les conditions de pression $P_{atm}$ et de température $T_{atm}$ atmosphériques échantillonnées et le débit correspondant dans les conditions de pression $P_{ref}$ et de température $T_{ref}$ des abaques de la figure 5.

Dans l'étape 112, la valeur du coefficient a est calculée au moyen de la formule :

$$\alpha := \frac{P_{atm}}{P_{ref}} \sqrt{\frac{T_{ref}}{T_{atm}}}$$

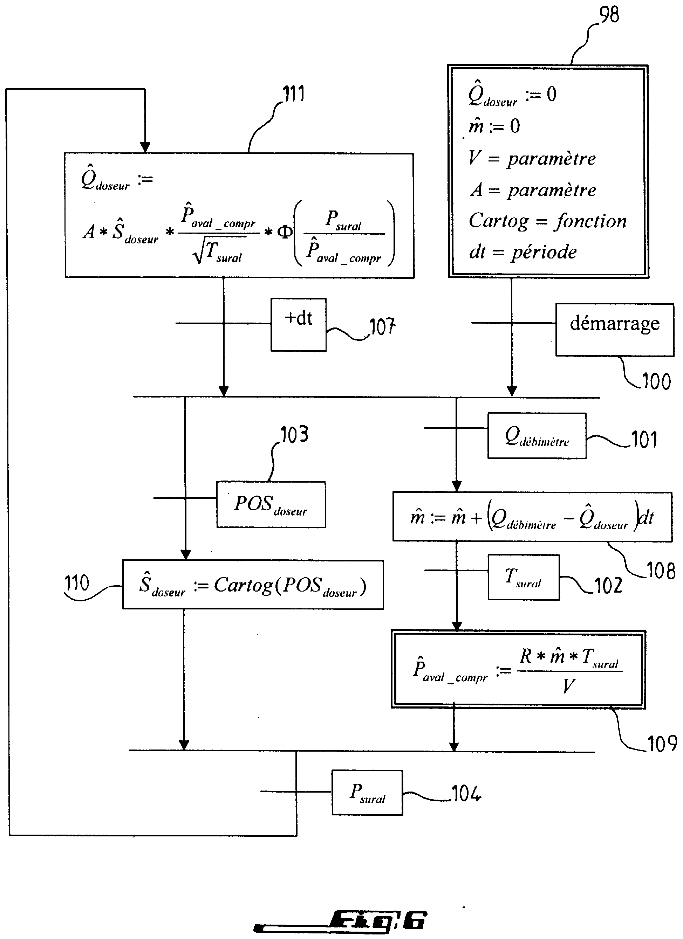

Une transition 106 est validée par une communication de la pression observable au même instant en aval du compresseur. La pression en aval peut être obtenue au moyen d'un échantillonnage sur un capteur de pression lors d'un top d'horloge temps réel sous réserve d'avoir préalablement installé un capteur de pression en aval du compresseur mais en amont de toute perte de charge subséquente. Pour éviter l'installation d'un capteur supplémentaire avec les répercussions que l'on sait sur le câblage et les risques de pannes, la pression en aval est obtenue par estimation telle que celle décrite plus loin en référence à la figure 6. La validation de la transition 106 active une étape 113.

L'étape 113 est agencée pour calculer le débit $Q_{min}$ en dessous duquel ne pas descendre pour éviter le pompage. La pression avale communiquée au passage de la transition 106, est divisée par la pression atmosphérique échantillonnée au passage de la transition 105. Le taux de compression ainsi calculé adresse une ligne « Abaq » de tableau mémorisé de laquelle est extraite une valeur Qcorr de débit limite de pompage. La valeur extraite est celle pour laquelle ce taux de compression a été calculé avec une pression et une température en amont du compresseur égales respectivement à la pression de référence $P_{ref}$ et à la température de référence $T_{ref}$. Une multiplication par le coefficient a permet d'obtenir le débit $Q_{min}$ pour une pression et une température en amont du compresseur égales respectivement à la pression atmosphérique $P_{atm}$ et à la température atmosphérique $T_{atm}$ mesurées.

Une transition 107 validée par un top d'horloge dans un intervalle de temps dt suivant, réactive la série de transitions et d'étapes 105, 112, 106 et 113 de sorte que la valeur de débit minimal converge en temps réel vers le débit $Q_{min}$ pour une pression et une température en amont du compresseur égales respectivement à la pression atmosphérique $P_{atm}$ et à la température atmosphérique $T_{atm}$ mesurées. Pour s'assurer de ne pas franchir la limite de pompage, on peut ajouter un talon de sécurité à la valeur calculée.

Dans le cas préféré où la pression en aval du compresseur qui valide en temps réel la transition 106, est une pression avale estimée $\hat{P}_{aval\_compr}$, cette pression avale est calculée par exemple au moyen des étapes de procédé décrites à présent en référence à la figure 6.

Un vecteur de valeurs $Q_{débitmètre}, T_{sural}, POS_{doseur}$ échantillonnées en temps réel, valide un vecteur de transitions 101, 102, 103. Les valeurs $Q_{débitmitre}, T_{sural}, POS_{doseur}$ sont mesurées respectivement par les capteurs 7b, 53a et 54.

Dans une étape initiale 98, le calculateur comprend en mémoire tout ou partie des données suivantes selon l'alternative de réalisation choisie pour mettre en oeuvre l'invention. Un débit doseur estimé $\hat{Q}_{doseur}$ et une masse accumulée estimée $\hat{m}$ sont initialisés à zéro. Une valeur V de volume depuis la sortie du compresseur 8 jusqu'au doseur 10 et une constante A sont paramétrées en fonction de la géométrie du moteur. Une cartographie Cartog est mémorisée sous forme analytique ou de tableau pour estimer une section efficace de doseur $\hat{S}_{doseur}$ en fonction d'une position d'ouverture de doseur $POS_{doseur}$ Le calculateur a une période d'horloge temps réel dt. On entend par section efficace la section d'une ouverture équivalente en termes de débit gazeux à l'ouverture effective du doseur obturée par un volet dont la position est celle attribuée au doseur.

L'étape initiale 98 est quittée lorsque la transition 100 est validée par une mise en contact de démarrage. La transition 101 active une étape 108 ordonnancée pour calculer une valeur temps réel de masse estimée $\hat{m}$ de gaz accumulée entre la sortie du compresseur 8 et l'entrée du doseur 10. La masse accumulée est l'intégrale de la différence entre le débit massique en sortie du compresseur et le débit massique traversant le doseur. En absence de fuite, le débit massique en sortie du compresseur est égal au débit massique $Q_{débitmètre}$ mesuré en entrée du compresseur. Si on dispose d'un débitmètre en aval du doseur, le débit traversant le doseur peut être mesuré de façon à valider la transition 101 sans besoin d'initialisation à zéro en étape 98. Une alternative qui s'affranchit d'un débitmètre en aval du doseur, consiste à utiliser le débit estimé $\hat{Q}_{doseur}$ du doseur qui est dans ce cas, initialisé à zéro en étape 98 puis calculé dans une étape 111 expliquée ultérieurement. Dans l'exemple d'étape 108 illustrée en figure 6, la masse cumulée couramment estimée est égale à la somme de la masse cumulée précédemment estimée et de la différence entre le débit massique entrant et le débit massique sortant multipliée par la période dt qui sépare deux exécutions successives de l'étape 108. La période dt est déterminée suffisamment courte pour considérer constante la différence de débit entre deux échantillonnages successifs. Pour fixer un ordre de grandeur, on voit souvent dans les processus temps réels une valeur dt égale à 20 ms.

La transition 102 active une étape 109 ordonnancée pour calculer une valeur temps réel de pression estimée $\hat{P}_{aval\_compr}$ de gaz accumulée entre la sortie du compresseur 8 et l'entrée du doseur 10. La valeur de la constante R des gaz parfaits étant connue, l'utilisation de la loi de Mariotte et de la loi universelle d'Avogadro, donne une pression estimée proportionnelle à la masse accumulée $\hat{m}$ multipliée par la température de suralimentation $T_{sural}$ exprimée en degrés Kelvin et la constante R que divise le volume V. Le système d'unités est bien entendu adapté, à titre d'exemple purement illustratif, la masse accumulée $\hat{m}$ est un nombre adimensionnel obtenu en divisant une masse mesurée ou calculée en Kg par la masse molaire de la composition gazeuse de l'air exprimée en Kg.

Les moteurs suralimentés disposent plus souvent d'un capteur de pression monté entre le doseur et l'entrée de la chambre de combustion que d'un débitmètre à ce niveau. C'est typiquement le cas du capteur 53b qui mesure la pression de suralimentation $P_{sural}$. L'étape 111 est alors activée par une transition 104 qui est validée par un échantillonnage de la pression $P_{sural}$.

Dans l'étape 111, l'estimée de débit $\hat{Q}_{doseur}$ est calculée au moyen de la formule :

$$\hat{Q}_{doseur} := A * \hat{S}_{doseur} * \frac{\hat{P}_{aval\_compr}}{\sqrt{T_{sural}}} * \Phi\left(\frac{P_{sural}}{\hat{P}_{aval\_compr}}\right)$$

où $\phi$ est une fonction solution des équations de Barré de Saint Venant et $\hat{S}_{doseur}$ est une estimée de section efficace du doseur.

On connaît de nombreuses fonctions de Barré de Saint Venant selon les domaines d'écoulement considérés. Dans le cas présent, on indique à titre essentiellement illustratif, la formule suivante :

$$\Phi\left(\frac{P_{sural}}{\hat{P}_{aval\_compr}}\right) = \sqrt{1 - \left(\frac{P_{sural}}{\hat{P}_{aval\_compr}}\right)^{\frac{\gamma-1}{\gamma}}}$$

où y est le coefficient adiabatique bien connu des gaz parfaits.

L'ouverture et par conséquent la section efficace du doseur peut dans certains cas, être directement proportionnelle à la consigne Dos* en sortie du filtre $F_2$. C'est le cas par exemple d'un doseur actionné par un moteur pas à pas pour lequel la position du volet est une image fidèle de la consigne appliquée sur l'actionneur. C'est le cas par exemple encore d'un doseur régulé localement en boucle fermée avec une contre-réaction locale sur la consigne d'ouverture donnée par le filtre $F_2$. En négligeant les régimes transitoires d'atteinte de consigne et en faisant intervenir un facteur d'échelle approprié dans la constante A, on peut se contenter d'une formule de type :

$$\hat{Q}_{doseur} := A * Dos^* * \frac{\hat{P}_{aval\_compr}}{\sqrt{T_{sural}}} * \Phi\left(\frac{P_{sural}}{\hat{P}_{aval\_compr}}\right)$$

Le procédé est plus robuste contre les pannes et plus fidèle en temps réel si on estime la section efficace à partir du capteur 54 rendu disponible à cet effet. C'est alors qu'intervient la transition 103 associée à la fonction Cartog mémorisée en étape 98 pour activer une étape 110. Dans l'étape 110, une estimée de section efficace de doseur $\hat{S}_{doseur}$ est calculée en faisant correspondre la position d'ouverture de doseur $POS_{doseur}$ mesurée à la section efficace donnée par la cartographie du doseur.

La transition 107 validée par un top d'horloge dans un intervalle de temps dt suivant, réactive la série de transitions et d'étapes 101, 108, 102, 109 et si besoin 103, 110, 104 et 111 de sorte que la valeur de pression avale estimée converge en temps réel vers la pression avale effective pour un débit $Q_{débimètre}$ traversant le compresseur et une température $T_{sural}$ en aval du compresseur.

L'invention telle que décrite ci-dessus présente différents avantages, parmi lesquels celui de pouvoir contrer le phénomène de pompage du compresseur en utilisant les capteurs dont on dispose de façon standard dans le moteur ou en n'ajoutant qu'un nombre minimal de capteurs, économisant ainsi le câblage et les contrôles de pannes ; celui de contrôler le phénomène de pompage par les causes directes, rapports de pressions, de débits et de température en amont et en aval du compresseur et de couvrir ainsi un plus large éventail des causes lointaines, quelque soient leurs répercussion sur les causes directes qui elles, sont mesurées ou estimées quelque soit le cas de figure ; celui d'un procédé modulable dans lequel une étape estimant une valeur pour laquelle il existe un capteur de mesure peut être court-circuitée ou utilisée afin de vérifier le bon fonctionnement du capteur.

## Revendications

1.   Moteur thermique comprenant une chambre de combustion (1), un compresseur (8) pour comprimer un gaz frais (4) à admettre en entrée de la chambre de combustion (1) et un doseur (10) disposé en sortie du compresseur (8), en amont d'une jonction de mélange (11) avec un circuit (3) haute pression de recirculation de gaz d'échappement, ledit doseur étant commandé par un boîtier électronique (60) de façon à réguler un débit massique de gaz frais admis dans le cylindre, **caractérisé en ce qu'**il comprend un capteur (53a) de température en aval du compresseur, et **en ce que** le boîtier électronique est agencé pour ne pas descendre en dessous d'un débit massique minimal qui est calculé en fonction d'un taux de compression du compresseur scruté en temps réel de façon à ne pas franchir une limite de pompage et **en ce que** le boîtier électronique (60) dispose de ressources de calcul ordonnancées pour calculer une pression estimée en aval du compresseur en multipliant une masse volumique de gaz accumulée entre le compresseur (8) et le doseur (10) par une température mesurée au moyen du capteur de température (53a).

2.   Moteur selon la revendication 1, **caractérisé en ce qu'**il comprend un capteur (52) de pression en amont du compresseur et **en ce que** le boîtier (60) dispose de ressources de calcul ordonnancées pour calculer le taux de compression scruté en divisant une pression en aval du compresseur par une pression mesurée au moyen du capteur de pression (52).

3.   Moteur selon l'une des revendications précédentes, **caractérisé en ce qu'**il comprend un capteur (7b) de débit massique en aval du compresseur et **en ce que** le boîtier (60) dispose de ressources de calcul ordonnancées pour calculer une estimation de masse de gaz accumulée en aval du compresseur en soustrayant un débit massique de gaz traversant le doseur d'un débit massique de gaz mesuré au moyen du capteur de débit (7b) et en intégrant dans le temps la différence ainsi obtenue.

4.   Moteur selon l'une des revendications précédentes, **caractérisé en ce qu'**il comprend un capteur (53b) de pression en aval du doseur et **en ce que** le boîtier (60) dispose de ressources de calcul ordonnancées pour calculer une estimation de débit traversant le doseur en fonction d'une section efficace du doseur et d'une pression de suralimentation mesurée au moyen du capteur de pression (53b).

**5.** Moteur selon la revendication 4, **caractérisé en ce qu'**il comprend un capteur (54) de position du doseur et **en ce que** le boîtier (60) dispose de ressources de calcul ordonnancées pour calculer une estimation de section efficace du doseur au moyen d'une cartographie du doseur qui donne une valeur de section efficace en fonction d'une position du doseur mesurée au moyen du capteur de position (54).

**6.** Procédé pour comprimer un gaz au moyen d'un compresseur et pour réguler un débit massique de gaz frais comprimé au moyen d'un doseur disposé en sortie du compresseur (8) en amont d'une jonction de mélange (11) avec un circuit (3) haute pression de recirculation de gaz d'échappement **caractérisé en ce qu'**il comprend une étape limitative (113) dans laquelle un débit massique minimal est calculé en fonction d'un taux de compression du compresseur scruté en temps réel de façon à ne pas franchir une limite de pompage et **en ce qu'**il comprend une étape estimative de pression (109) dans laquelle une pression estimée en aval du compresseur est calculée en multipliant une masse volumique de gaz accumulée entre le compresseur et le doseur par une température mesurée au moyen d'un capteur de température en aval du compresseur.

**7.** Procédé selon la revendication 6, **caractérisé en ce que** dans ladite étape limitative (113) le taux de compression scruté dans ladite étape limitative (113) est calculé en divisant une pression en aval du compresseur par une pression mesurée au moyen d'un capteur de pression en amont du compresseur.

**8.** Procédé selon l'une des revendications 6 à 7, **caractérisé en ce qu'**il comprend une étape estimative de masse accumulée (108) dans laquelle une estimation de masse de gaz accumulée en aval du compresseur est calculée en soustrayant un débit massique de gaz traversant le doseur d'un débit massique de gaz mesuré au moyen d'un capteur de débit en aval du compresseur et en intégrant dans le temps la différence ainsi obtenue.

**9.** Procédé selon l'une des revendications 6 à 8, **caractérisé en ce qu'**il comprend une étape estimative de débit (111) dans laquelle une estimation de débit traversant le doseur est calculée en fonction d'une section efficace du doseur et d'une pression de suralimentation mesurée au moyen d'un capteur de pression en aval du doseur.

**10.** Procédé selon la revendication 9, **caractérisé en ce qu'**il comprend une étape estimative de section efficace (110) dans laquelle une estimation de section efficace du doseur est calculée au moyen d'une cartographie du doseur qui donne une valeur de section efficace en fonction d'une position du doseur mesurée au moyen d'un capteur de position du doseur.

**Patentansprüche**

**1.** Wärmekraftmotor, der eine Brennkammer (1), einen Verdichter (8) zum Verdichten frischen Gases (4), das am Einlass der Brennkammer (1) einzulassen ist, und einen Dosierer (10), der am Ausgang des Verdichters (8), stromaufwärts von einer Mischverbindung (11) mit einem Hochdruckkreislauf (3) zur Abgasrückführung, angeordnet ist, umfasst, wobei der Dosierer von einem Elektronikgehäuse (60) derart gesteuert wird, dass ein Massendurchfluss an frischem Gas, das in den Zylinder eingelassen wird, geregelt wird, **dadurch gekennzeichnet, dass** er einen Temperatursensor (53a) stromabwärts des Verdichters umfasst, und dass das Elektronikgehäuse eingerichtet ist, um nicht unter einen minimalen Massendurchfluss zu sinken, der in Abhängigkeit von einer Verdichtungsrate des Verdichters berechnet ist, der in Echtzeit derart abgetastet wird, dass er ein Pumplimit nicht überschreitet, und dass das Elektronikgehäuse (60) über geplante Rechenressourcen verfügt, um einen stromabwärts des Verdichters geschätzten Druck zu berechnen, indem eine volumenbezogene Masse von Gas, die sich zwischen dem Verdichter (8) und dem Dosierer (10) angesammelt hat, mit einer Temperatur multipliziert wird, die mittels des Temperatursensors (53a) gemessen wird.

**2.** Motor nach Anspruch 1, **dadurch gekennzeichnet, dass** er einen Drucksensor (52) stromaufwärts des Verdichters umfasst, und dass das Gehäuse (60) über geplante Rechenressourcen verfügt, um die abgetastete Verdichtungsrate zu berechnen, indem ein Druck stromabwärts des Verdichters durch einen Druck, der mittels des Drucksensors (52) gemessen wird, dividiert wird.

**3.** Motor nach einem der vorstehenden Ansprüche, **dadurch gekennzeichnet, dass** er einen Massendurchflusssensor (7b) stromabwärts des Verdichters umfasst, und dass das Gehäuse (60) über geplante Rechenressourcen verfügt, um eine Schätzung angesammelter Gasmasse stromabwärts des Verdichters zu berechnen, indem ein Gasmassendurchfluss, der den Dosierer durchquert, von einem Gasmassendurchfluss, der mittels des Durchflusssensors (7b) berechnet wird, subtrahiert wird und indem der derart erhaltene Unterschied im Laufe der Zeit integriert wird.

**4.** Motor nach einem der vorstehenden Ansprüche, **dadurch gekennzeichnet, dass** er einen Drucksensor (53b) stromabwärts des Dosierers umfasst, und dass das Gehäuse (60) über geplante Rechenressourcen verfügt, um eine Schätzung von Durchfluss, der den Dosierer durchquert, in Abhängigkeit von einem Wirkquerschnitt des Dosierers und einem Aufladedruck, der mittels des Drucksensors (53b) gemessen wird, zu berechnen.

**5.** Motor nach Anspruch 4, **dadurch gekennzeichnet, dass** er einen Positionssensor (54) des Dosierers umfasst, und dass das Gehäuse (60) über geplante Rechenressourcen verfügt, um eine Schätzung eines Wirkquerschnitts des Dosierers mittels einer Kartographie des Dosierers, die einen Wirkquerschnittwert in Abhängigkeit von einer Position des Dosierers gibt, die mittels des Positionssensors (54) gemessen wird, zu berechnen.

**6.** Verfahren zum Verdichten eines Gases mittels eines Verdichters, um einen Massendurchfluss an frischem Gas zu regeln, der mittels eines Dosierers verdichtet wird, der am Ausgang des Verdichters (8) stromaufwärts einer Mischverbindung (11) mit einem Hochdruckkreislauf (3) zur Abgasrückführung angeordnet ist, **dadurch gekennzeichnet, dass** es einen Einschränkungsschritt (113) umfasst, bei dem ein minimaler Massendurchfluss in Abhängigkeit von einer Verdichtungsrate des Verdichters, die in Echtzeit abgetastet wird, derart berechnet wird, dass ein Pumplimit nicht überschritten wird, und dass es einen Druckschätzungsschritt (109) umfasst, bei dem ein stromabwärts des Verdichters geschätzter Druck durch Multiplizieren einer volumenbezogenen Masse an Gas, die sich zwischen dem Verdichter und dem Dosierer angesammelt hat, mit einer Temperatur, die mittels eines Temperatursensors stromabwärts des Verdichters gemessen wird, berechnet wird.

**7.** Verfahren nach Anspruch 6, **dadurch gekennzeichnet, dass** bei dem Einschränkungsschritt (113) die Verdichtungsrate, die bei dem Einschränkungsschritt (113) abgetastet wird, berechnet wird, indem ein Druck stromabwärts des Verdichters durch einen Druck, der mittels eines Drucksensors stromaufwärts des Verdichters gemessen wird, dividiert wird.

**8.** Verfahren nach einem der Ansprüche 6 bis 7, **dadurch gekennzeichnet, dass** es einen Schätzungsschritt einer angesammelten Masse (108) umfasst, bei dem eine Schätzung einer angesammelten Gasmasse stromabwärts des Verdichters berechnet wird, indem ein Gasmassendurchfluss, der den Dosierer durchquert, durch einen Gasmassendurchfluss, der mittels eines Durchflusssensors stromabwärts des Verdichters gemessen wird, dividiert wird, und indem der derart erhaltene Unterschied im Laufe der Zeit integriert wird.

**9.** Verfahren nach einem der Ansprüche 6 bis 8, **dadurch gekennzeichnet, dass** es einen Durchsatzschätzungsschritt (111) umfasst, bei dem eine Schätzung eines Durchsatzes, der den Dosierer durchquert, in Abhängigkeit von einem Wirkquerschnitt des Dosierers und einem Aufladedruck, der mittels eines Drucksensors stromabwärts des Dosierers gemessen wird, berechnet wird.

**10.** Verfahren nach Anspruch 9, **dadurch gekennzeichnet, dass** es einen Schätzungsschritt (110) eines Wirkquerschnitts umfasst, bei dem eine Schätzung eines Wirkquerschnitts des Dosierers mittels einer Kartographie des Dosierers, die einen Wirkquerschnittwert in Abhängigkeit von einer Position des Dosierers gibt, die mittels eines Positionssensors des Dosierers gemessen wird, berechnet wird.

**Claims**

**1.** A heat engine including a combustion chamber (1), a compressor (8) for compressing a fresh gas (4) to be admitted at an inlet of the combustion chamber (1) and a metering device (10) arranged at the outlet of the compressor (8), upstream of a mixture junction (11) with a high pressure circuit (3) for recirculation of exhaust gas, said metering device being controlled by an electronic unit (60) so as to regulate a mass flow of fresh gas admitted in the cylinder, **characterized in that** it includes a temperature sensor (53a) downstream of the compressor, and **in that** the electronic unit is arranged so as not to fall below a minimum mass flow which is calculated as a function of a compression rate of the compressor examined in real time so as not to exceed a pumping limit and **in that** the electronic unit (60) has calculation resources scheduled to calculate an estimated pressure downstream of the compressor by multiplying a density of gas accumulated between the compressor (8) and the metering device (10) by a temperature measured by means of the temperature sensor (53a).

**2.** The engine according to Claim 1, **characterized in that** it includes a pressure sensor (52) upstream of the compressor and **in that** the unit (60) has calculation resources scheduled to calculate the rate of compression examined by dividing a pressure downstream of the compressor by a pressure measured by means of the pressure sensor (52).

**3.** The engine according to one of the preceding claims, **characterized in that** it includes a sensor (7b) of mass flow downstream of the compressor and **in that** the unit (60) has calculation resources scheduled to calculate an estimation of mass of gas accumulated downstream of the compressor by subtracting a mass flow of gas passing through the metering device from a mass flow of gas measured by means of the flow sensor (7b) and by integrating in time the difference thus obtained.

**4.** The engine according to one of the preceding claims, **characterized in that** it includes a pressure sensor (53b) downstream of the metering device and **in that** the unit (60) has calculation resources scheduled to calculate an estimation of flow passing through the metering device as a function of a cross-section of the metering device and of a boost pressure measured by means of the pressure sensor (53b).

**5.** The engine according to Claim 4, **characterized in that** it includes a position sensor (54) of the metering device and **in that** the unit (60) has calculation resources scheduled to calculate a cross-section estimation of the metering device by means of a mapping of the metering device which gives a cross-section value as function of a position of the metering device measured by means of the position sensor (54).

**6.** A method for compressing a gas by means of a compressor and for regulating a mass flow of compressed fresh gas by means of a metering device arranged at the outlet of the compressor (8) upstream of a mixture junction (11) with a high pressure circuit (3) for recirculation of exhaust gas, **characterized in that** it includes a limitative step (113) in which a minimum mass flow is calculated as a function of a compression rate of the compressor examined in real time so as not to exceed a pumping limit and **in that** it includes a pressure estimation step (109) in which an estimated pressure downstream of the compressor is calculated by multiplying a density of gas accumulated between the compressor and the metering device by a temperature measured by means of temperature sensor downstream of the compressor.

**7.** The method according to Claim 6, **characterized in that** in said limitative step (113) the compression rate examined in said limitative step (113) is calculated by dividing a pressure downstream of the compressor by a pressure measured by means of a pressure sensor upstream of the compressor.

**8.** The method according to one of Claims 6 to 7, **characterized in that** it includes an estimation step of accumulated mass (108) in which an estimation of mass of accumulated gas downstream of the compressor is calculated by subtracting a mass flow of gas passing through the metering device from a mass flow of gas measured by means of a flow sensor downstream of the compressor and by integrating in time the difference thus obtained.

**9.** The method according to one of Claims 6 to 8, **characterized in that** it includes an estimation step of flow (111) in which an estimation of flow passing through the metering device is calculated as a function of a cross-section of the metering device and of a boost pressure measured by means of a pressure sensor downstream of the metering device.

**10.** The method according to Claim 9, **characterized in that** it includes a cross-section estimation step (110) in which a cross-section estimation of the metering device is calculated by means of a mapping of the metering device which gives a cross-section value as a function of a position of the metering device measured by means of a position sensor of the metering device.

_Fig. 1_

_Fig. 2_

CONSIGNE AIR
.23.

BOUCLE OUVERTE
+REGULATION
PID
.31HP.

UNITE DE
CONTROLE
DOSEUR
.37.

DOSEUR 10.

UNITE DE
COMMANDE
VANNE
.33HP.

VANNE HP .14.

_Fig. 3_

CONSIGNE
PRESSION
.39.

BOUCLE OUVERTE
+REGULATION
PID
.43.

UNITE DE
CONTROLE
ACTIONNEUR
.47.

ACTIONNEUR 22.

.44.

.48.

## Fig. 4

## Fig. 5

Fig. 6

99

$$P_{ref} = paramètre$$
$$T_{ref} = paramètre$$
$$Abaq = fonction$$
$$dt = période$$

107

$+ dt$

démarrage

100

$P_{atm} ; T_{atm}$ 105

$$\alpha \equiv \frac{Q_{min}\left(P_{atm}, T_{atm}\right)}{Q_{corr}} := \frac{P_{atm}}{P_{ref}} \sqrt{\frac{T_{ref}}{T_{atm}}}$$ 112

$\hat{P}_{aval\_compr}$ 106

$$Q_{corr} := Abaq\left(\frac{\hat{P}_{aval\_compr}}{P_{atm}}\right)$$

$$Q_{min} := \alpha * Q_{corr}$$

113

FIG 7

$$Fig.8$$

**EP 2 045 455 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2007012030 A